# EUROPÄISCHE PATENTSCHRIFT

(11) **EP 3 564 912 B1**
(45) Veröffentlichungstag und Bekanntmachung des Hinweises auf die Patenterteilung: **23.03.2022**
(21) Anmeldenummer: 19171806.3
(22) Anmeldetag: 30.04.2019
(51) Int. Cl.: G07C 9/00, G06K 7/10

(54) **ZUGANGS- UND LESESTATION**
ACCESS AND READ STATION
STATION D'ACCÈS ET DE LECTURE

(30) Priorität: 03.05.2018 DE 202018102466 U
(43) Veröffentlichungstag der Anmeldung: 06.11.2019
(73) Patentinhaber: Astra Gesellschaft Für Asset Management MbH&Co. Kg, 30890 Barsinghausen (DE)
(72) Erfinder: Stobbe, Anatoli, 30890 Barsinghausen (DE); Maaß, Norman, 30455 Hannover (DE)
(74) Vertreter: Patentanwälte Thömen & Körner

(56) Entgegenhaltungen:
- DE-A1-102012 020 125
- DE-U1-202017 100 566
- DE-U1-202017 100 982

## Beschreibung

Die Erfindung betrifft eine Zugangs- und Lesestation nach dem Oberbegriff des Anspruchs 1.

Um den Lagerbestand von mit RFID-Transponder versehenen Gegenständen zu erfassen, werden die RFID-Transponder mittels einer Lesestation gelesen, wenn sie in das Lager verbracht oder aus dem Lager entnommen werden. Dabei werden die Gegenstände üblicherweise in einer Vielzahl im dreistelligen Bereich im Transportwagen verladen und mit dem Transportwagen dann gemeinsam ins Lager gefahren. Bei der Entnahme der Gegenstände aus dem Lager werden die Gegenstände zumeist in geringer einstelliger Stückzahl mittels eines gesonderten Lesegeräts und eines Berechtigungsausweises jeweils einer bestimmten Person zugeordnet. Es ist aber auch möglich, dass größere Stückzahlen der Gegenstände an andere Orte verlegt werden und zu diesem Zweck ebenfalls in einer Vielzahl in Transportwagen verladen und mit dem Transportwagen dann gemeinsam aus dem Lager gefahren werden.

Das Lesen einer großen Stückzahl von RFID-Transpondern erfordert ein Zeitfenster, in dem eine Kommunikation zwischen den RFID-Transpondern und dem Lesegerät oder mehreren Lesegeräten der Lesestation aufrechterhalten werden muss, da die Daten der RFID-Transponder zeitlich nacheinander gelesen werden und bei Datenkollisionen die Lesevorgänge wiederholt werden müssen. Bei einer Vielzahl von in einem Transportwagen befindlichen und zusammen mit dem Transportwagen bewegten Gegenständen mit RFID-Transpondern besteht daher das Risiko, dass der Transportwagen das Lesefeld der zur Lesestation gehörenden Lesegeräte verlässt, ehe alle RFID-Transponder gelesen sind.

Aus der DE 20 2017 100 566 U1 ist eine dafür geeignete Lesestation bekannt. Die einen Korridor umfassende Lesestation ermöglicht durch die mit elektromagnetischen Feldreflektoren ausgestatteten Seitenwände ein Streuen des elektromagnetischen Lesefeldes durch mehrfache Reflexionen in der Art, dass überall innerhalb des Korridors eine ausreichende Feldstärke zum Betrieb der RFID-Transponder und zum Lesen ihrer Daten herrscht. Außerhalb des Korridors dagegen ist die Feldstärke geringer, wodurch Störungen, z. B. durch das unerwünschte Lesen von außerhalb des Korridors befindlichen RFID-Transpondern vermieden werden. Ebenso werden unerwünschte Störungen anderer im gleichen Frequenzbereich arbeitender Geräte vermieden. Umgekehrt wird auch das Eindringen von aus fremden Quellen stammender elektromagnetischer Energie in das Innere des Korridors reduziert.

Der abknickende Verlauf des Korridors führt zu einer weiteren Streuung des elektromagnetischen Feldes durch Reflexionen des unter unterschiedlichen Winkeln auf die Feldreflektoren auftretenden elektromagnetischen Felder und sorgt für eine noch bessere Versorgung des Innenraums des Korridors mit elektromagnetischer Energie, um die durch den Korridor transportierten RFID-Transponder mit Betriebsenergie zu versorgen, so dass diese ihre Daten zuverlässig aussenden und dem Lesegerät übermitteln können.

Die Länge des Korridors führt beim Durchfahren mit einem Transportwagen, der mit einer Vielzahl von mit RFID-Transpondern ausgestatteten Gegenständen beladen ist, bereits für sich zu einer längeren Verweildauer der RFID-Transponder im elektromagnetischen Feld, als es ein Lesegerät mit ausschließlich einer Richtantenne könnte, da diese für sich nur einen sehr begrenzten Bereich abdeckt. Durch das zusätzliche Abknicken der Seitenwände des Korridors wird die Verweildauer der RFID-Transponder im elektromagnetischen Lesefeld nochmals erhöht, da der Nutzer zwangsläufig die Geschwindigkeit des Transportwagens verringern oder ihn sogar kurzzeitig zum Stehen bringen muss, um ihn in die neue Richtung zu lenken und weiter zu schieben. Es handelt sich hierbei also um eine durch die Bauform vorgegebene Schikane auf den Transportweg durch den Korridor. Sofern der Transportwagen zum Einschlagen in die neue Fahrtrichtung gedreht werden muss, da sein Fahrwerk keine Diagonal- oder Querbewegung zulässt, werden die RFID-Transponder bei diesem Vorgang zwangsläufig mitgedreht. Sind die Antennen der RFID-Transponder für eine waagerechte Polarisation ausgerichtet, so wird durch diese Drehung auch die Ausrichtung der Antennen der RFID-Transponder zur Ausbreitungsrichtung des elektromagnetischen Feldes verändert. Bei einer vorher eventuell ungünstigen Ausrichtung der Antennen der RFID-Transponder zur Ausbreitungsrichtung des elektromagnetischen Feldes im Korridor am jeweiligen Ort der Antennen besteht dann eine erhöhte Wahrscheinlichkeit, dass eine günstigere Ausrichtung der Antennen der RFID-Transponder erreicht wird und somit die Kommunikation zwischen den RFID-Transpondern und den Lesegeräten insgesamt sicherer wird.

Gemäß einer Ausführungsform ist zwar vorgesehen, Nutzer mittels einer Zutrittsampel die Gewährung oder Nichtgewährung des Zutritts zum Lager und Verlassens des Lagers anzuzeigen und bei unzulässiger Entnahme von Gegenständen auch Alarm auszulösen, eine mechanische Durchgangssperre ist jedoch nicht vorhanden.

Aus der DE 10 2012 0201251 ist eine Kontrollvorrichtung zur Kontrolle des Transfers von Wäschestücken aus bzw. in ein Wäschemagazin bekannt, die eine Personenschleuse mit zwei Sperrorganen an deren beiden Enden umfasst. Da die Sperrorgane dazu dienen, die elektromagnetische Strahlung für die Erfassung von Nutzer-Identifikationsdaten zu konzentrieren, sind daher stets Betriebszustände vorhanden, in denen beide Sperrorgane geschlossen sind, während sich ein Nutzer in der Personenschleuse befindet. Dieser Zustand kann für Personen, die unter Platzangst leiden, unangenehm sein.

Außerdem ist aus der DE 20 2017 100 982 U1 eine Einrichtung zur Bestandsüberwachung von mit Transpondern versehenen Waren bekannt. Sie umfasst einen Warendurchgang zu und von einem Lagerraum und eine Personenvereinzelungsvorrichtung, über die der Lagerraum von einer Person betreten und/oder verlassen werden kann. Die Personenvereinzelungsvorrichtung und der Warendurchgang sind separat ausgebildet.

Der Erfindung liegt die Aufgabe zugrunde, eine Zugangs- und Lesestation zu schaffen, die neben der üblichen Erfassung von Transponderdaten zwar einen Durchgang durch den Korridor sperren kann aber dennoch keine geschlossene Schleuse bildet.

Diese Aufgabe wird bei einer Zugangs- und Lesestation nach dem Oberbegriff des Anspruchs 1 durch die Merkmale dieses Anspruchs gelöst.

Weiterbildungen und vorteilhafte Ausgestaltungen ergeben sich aus den Unteransprüchen.

Bei der erfindungsgemäßen Lösung ist lediglich eine einzige Durchgangssperre mit einem Türportal und einer verschließbaren Tür vorhanden. Diese kann am Eingang oder innerhalb des Korridors angeordnet sein. Die Tür regelt sowohl den Zutritt zum Lager durch den Korridor als auch das Verlassen des Lagers mit Gegenständen durch den Korridor. Dadurch wird erreicht, dass nur Nutzer und Lageristen mit gültigen Berechtigungsausweisen durch den Korridor in das Lager gelangen können, gleichgültig ob sie das Lager bestücken oder Gegenstände in ein anderes Lager verlegen oder Gegenstände aus dem Lager zur Benutzung abholen wollen. Zum Bestücken werden die Gegenstände bereits beim Passieren des Korridors vom Eingang in Richtung des Ausgangs zum Lager durch Lesen der RFID-Transponder mittels eines im Korridor angeordneten Lesegeräts registriert.

Zusätzlich ist am Ausgang des Korridors ein zweites Portal, jedoch ohne Tür angeordnet und in oder an der Brücke des zweiten Portals sind eine in das Innere des Korridors gerichtete Leseantenne eines RFID Lesegeräts sowie Zutrittsampeln angeordnet, die auf die vom Korridor abgewandte Seite des Ausgangs gerichtet sind. Außerdem sind in oder an der Brücke des zweiten Portals Näherungssensoren angeordnet, die auf die dem Korridor zugewandte Seite des Ausgangs gerichtet sind und mittels denen das RFID Lesegerät zum Erfassen entnommener Gegenstände einschaltbar ist.

Beim Verlassen des Lagers werden mittels des Lesegeräts im Korridor die entnommenen Gegenstände registriert und einem Nutzer zugeordnet, nachdem dieser sich mit seinem Nutzerausweis am Ausweisleser identifiziert hat. Da durch ein gesondertes Lesegerät im Lager bereits eine Zuordnung stattgefunden hat, dient das Lesegerät im Korridor zur Verifizierung und zur Erkennung von Gegenständen, die nicht oder nicht richtig registriert wurden. Durch Blockieren der verschließbaren Tür im Türportal wird der Nutzer gehindert, den Korridor auf der dem Lager abgewandten Seite zu verlassen. Er erhält jedoch Gelegenheit ohne weitere Behinderung durch Sperrorgane die unzulässig entnommenen Gegenstände wieder ins Lager zu verbringen und erneut den Korridor zu passieren. Eine beidseitig geschlossene Personenschleuse wird so in jedem Falle vermieden. Als Fluchtweg in einem Notfall kann ein alarmgesicherter Notausgang vorgesehen sein.

Die Tür im Türportal kann durch einen Nutzerausweis servogesteuert öffne- und schließbar sein oder mechanisch durch einen Nutzer oder einen Transportwagen im freigegeben Modus aus ihrer Geschlossenstellung in die jeweiligen Durchgangsrichtung aufgestoßen werden und anschließend selbständig durch Federkraft in ihre Geschlossenstellung zurückkehren.

Beide Varianten der Tür im Türportal ermöglichen einen zügigen Durchgang sowohl von Einzelpersonen als auch zusammen mit einem Transportwagen. Zum Öffnen und Schließen der servogesteuerten Tür ist zwar keine körperliche Kraft durch den Nutzer nötig, allerdings ist der Einsatz elektromechanischer Bauteile mit einem erhöhten Wartungsaufwand verbunden. Demgegenüber benötigt eine mechanisch durch einen Nutzer oder einen Transportwagen aufstoßbare Tür lediglich elektromechanische Sperrorgane aber ansonsten keine Bauteile zum elektromechanischen Antrieb. Neben geringeren Kosten ist daher auch mit einem geringeren Wartungsaufwand zu rechnen.

In einer Brücke des Türportals kann ein Servoantrieb einer servogesteuerten Tür oder eine elektromechanische Sperrvorrichtung einer mechanisch durch einen Nutzer oder einen Transportwagen aufstoßbaren Tür angeordnet sein.

Eine Brücke des Türportals ist ohnehin nötig, um die beiden seitlichen Stützen oben miteinander zu verbinden. Diese Brücke wird gleichzeitig auch zur Unterbringung des Servoantriebs oder der elektromechanischen Sperrvorrichtung optimal angeordnet und platzsparend mitbenutzt.

Weiterhin kann in oder an derselben Brücke des Türportals wenigstens eine in das Innere des Korridors gerichtete Leseantenne eines RFID Lesegeräts angeordnet sein.

Dadurch wird der von der Brücke beanspruchte Raum platzsparend auch zur Unterbringung der Leseantenne eines RFID-Lesegeräts genutzt, wobei die Leserantenne sich in einer optimalen Position befindet, um schräg von oben die elektromagnetische Energie zur Schaffung des Lesefelds in den Korridor auszusenden.

Ferner können in oder an derselben Brücke des Türportals Zutrittsampeln angeordnet sein, die zumindest auf die vom Korridor abgewandte Seite des Eingangs gerichtet sind, und Näherungssensoren angeordnet sein, die auf die dem Korridor zugewandte Seite des Eingangs gerichtet sind und mittels denen und/oder durch die Ausweisleser und/oder ein zusätzliches Eingabegerät das das RFID Lesegerät zum Erfassen von zu bestückenden Gegenständen einschaltbar ist.

Auch zur Unterbringung dieser Komponenten eignet sich die Brücke des Türportals, da sich die Zutrittsampeln im unverdeckbaren Sichtfeld des Nutzers befinden und auch die Näherungssensoren mit hoher Trennschärfe den Eingangsbereich des Korridors erfassen und Personen oder Transportwagen erkennen können.

So können sich zum Beispiel Ausweise von normalen Nutzern und solche von Lageristen durch Kennungen unterscheiden, die dazu dienen das RFID-Lesegerät beim Durchqueren des Korridors vom Eingang zum Ausgang nur dann einzuschalten, wenn sich ein Lagerist mit einem Transportwagen identifiziert hat. In anderen Fällen, in denen ein normaler Nutzer den Korridor ohne Gegenstände vom Eingang zum Ausgang durchquert, um Gegenstände aus dem Lager zu holen, ist das Einschalten des RFID-Lesegerät unnötig. Falls keine unterschiedlichen Kennungen der Ausweise vorgesehen sind, kann das RFID-Lesegerät zum Zwecke der Registrierung von zu bestimmenden Gegenständen auch durch ein Eingabegerät eingeschaltet werden. Das RFID-Lesegerät kann entweder zeitgesteuert nach erfassen aller Transponder oder beim Passieren der Ernährungssensoren am Ausgang des Korridors ausgeschaltet werden

Da sich das Türportal als besonders geeignet zur Aufnahme von elektrischen und elektronischen Komponenten erwiesen hat, wird zur Unterbringung gleicher Komponenten auf der Ausgangsseite des Korridors ein zweites Portal angeordnet, das baugleich zum Türportal sein kann aber keine Tür und auch keinen Servoantrieb oder eine elektromechanische Sperrvorrichtung umfasst. Der Vorteil eines zweiten Portals mit den gleichen Komponenten hat den Vorteil, dass weniger individuelle Bauteile benötigt werden und der Korridor auch an der Ausgangsseite mit einer Leseantenne eines RFID-Lesegeräts ausgestattet werden kann, wodurch das Laserfeld homogener gestaltet werden kann. Die Zutrittsampeln können einem Nutzer bereits vor Betreten des Korridors signalisieren, ob ein Durchgang möglich ist oder ein anderer Nutzer bereits von der anderen Seite in den Korridor eingetreten ist. Ferner wird durch den Näherungssensor das Lesefeld bereits mit Betreten des Korridors eingeschaltet, sodass genügend Zeit zum Lesen der RFID-Transponder verbleibt, wenn größere Anzahlen von Transpondern gemeinsam erfasst werden müssen, zum Beispiel beim Verlegen von Gegenständen in ein anderes Lager. Beim Durchqueren des Korridors in Richtung vom Ausgang zum Eingang wird das RFID-Lesegerät generell eingeschaltet, um alle Entnahmen zu registrieren oder verifizieren, unabhängig davon, ob sich ein Nutzer ausgewiesen hat oder nicht. Zu diesem Zweck wird das RFID-Lesegerät stets durch Näherungssensoren auf der Seite des Ausgangs eingeschaltet.

Gemäß einer Weiterbildung kann die Sendeleistung des RFID-Lesegerät zwischen wenigstens zwei unterschiedlichen Leistungswerten gewählt werden, wobei zum Lesen der Transponder weniger Gegenstände, wie sie von normalen Nutzern bei Entnahme aus dem Lager mitgeführt werden, eine geringe Sendeleistung und beim Lesen der Transponder von Gegenständen auf einem Transportwagen, wie sie von Lageristen beim Bestücken des Lagers oder beim Verlegen von Gegenständen in ein anderes Lager vorkommen eine hohe Sendeleistung eingeschaltet werden.

Auf diese Weise wird erreicht, dass im normalen Betrieb, bei dem lediglich einige wenige Gegenstände mit Transpondern aus dem Lager entnommen werden nur diejenige Sendeleistung eingesetzt wird, die zum Lesen der Transponder nötig ist. Durch die geringe Leistung wird verhindert, dass falschpositive Lesungen auftreten, wenn durch Reflexionen nicht zugewiesene Transponder aus dem Lagerraum gelesen werden, die dann Alarm auslösen oder die Tür fälschlicherweise blockieren.

Beim Bestücken oder Verlegen von Gegenständen, die sich auf einem üblicherweise mit Metallgittern versehenen Transportwagen befinden ist die Dämpfung größer, was durch eine höhere Sendeleistung ausgeglichen werden kann. Ist hier auch die Absorption der Sendeleistung durch die zahlreichen Transponder größer als bei wenigen Transponder, wodurch falschpositive Lesungen unwahrscheinlicher sind. Das Einschalten der unterschiedlichen Sendeleistungen kann durch unterschiedliche Kennungen der Ausweise von normalen Nutzern und Lageristen oder durch ein gesondertes Eingabegerät erfolgen. Im Normalfall ist die niedrige Sendeleistung vorgegeben.

Zusätzlich oder alternativ zum zweiten Portal können in oder an der Brücke des Türportals Zutrittsampeln angeordnet sein, die auf die dem Korridor zugewandte Seite des Eingangs gerichtet sind.

Die Anordnung von Zutrittsampeln an dieser Stelle kann für einen Nutzer sinnvoll sein, der mit zulässigen Gegenständen bereits in den Korridor eingetreten ist, beim Lesen der RFID-Transponder im Korridor aber festgestellt wird, dass auch unzulässige Gegenstände enthalten ist, die der Nutzer nicht aus dem Lager entfernen darf. Eine Zutrittsampel nur am Ausgang des Korridors auf der Lagerseite könnte diesen Fall nicht rechtzeitig anzeigen.

Ferner können in oder an einer der seitlichen Stützen des Türportals Ausweisleser angeordnet sein.

Diese sind bequem vom Nutzer erreichbar und ermöglichen eine direkte Kabelverbindung über die seitlichen Stützen zur Brücke und damit zu den anderen elektrischen und elektronischen Komponenten.

Auch in oder an einer der seitlichen Stützen des zweiten Portals können Ausweisleser angeordnet sein.

Dadurch kann ein Nutzer vom Lager aus bereits vor Betreten des Korridors identifiziert werden und ihm die mitgeführten Gegenstände beim anschließenden Lesevorgang der RFID-Transponder im Korridor zugewiesen werden. Er muss also nicht erst den Korridor durchqueren und sich am Türportal ausweisen.

In der Brücke des Türportals und/oder der Brücke des zweiten Portals und/oder einer Decke des Korridors können Leuchten angeordnet sein, die durch die Ausweisleser oder beim Betreten des Korridors durch die Näherungssensoren einschaltbar sind.

Dadurch wird der Korridor beleuchtet, ehe ein Nutzer ihn betritt bzw. durchquert. Der Eindruck eines dunklen engen Raums wird so beseitigt. Durch die Beschränkung der Einschaltdauer während des Aufenthalts eines Nutzers im Korridor wird außerdem Energie gespart. Durch die Farbe der Leuchten kann zusätzlich das Signal der Zutrittsampeln auch innerhalb des Korridors angezeigt werden.

Vorzugsweise sind der Servoantrieb oder die elektromechanische Sperrvorrichtung sowie die Leseantennen des RFID Lesegeräts, die Ausweisleser, die Zutrittsampeln, die Leuchten und die Näherungssensoren mit einem gemeinsamen Steuerrechner verbunden oder gekoppelt.

Mittels dieses Steuerrechners können alle Erfassung- und Zutrittsaufgaben zentral ausgeführt werden.

Gemäß einer Weiterbildung bestehen die Seitenwände des Korridors aus Wandelementen einheitlicher Höhe und Breite von 120cm x 120cm und das Türportal weist eine Tiefe von 30 cm auf.

Die einheitlichen Abmessungen der Wandelemente der Seitenwände des Korridors ermöglichen einmal reproduzierbare Feldausbreitung und Lesebedingungen innerhalb des Korridors und gestatten außerdem den kompakten Transport zum Einsatzort auf wenigen standardmäßigen Europaletten. Das gleiche trifft auch auf die Abmessungen des Türportals zu.

Hinsichtlich der Eigenschaften der Seitenwände des Korridors gelten im Übrigen die gleichen Merkmale, wie sie in der bereits genannten DE 20 2017 100 5661 beschrieben und hier nochmals aufgeführt sind.

Die Seitenwände des Korridors können elektromagnetischen Feldreflektoren aufweisen, die unterbrochene oder durchgehende elektrisch leitfähige Flächen sein können und Metall oder Kohlenstoff oder elektrisch leitfähige Polymere enthalten.

Die Materialien können je nach gewünschter Leitfähigkeit eingesetzt werden. Während Metalle die größte Leitfähigkeit und die geringsten Verluste bei der Reflexion aufweisen, ist die Leitfähigkeit bei Kohlenstoff und Polymeren geringer. Die Verluste bei der Reflexion sind größer, denn die elektromagnetische Energie wird teilweise absorbiert.

Die elektromagnetischen Feldreflektoren können in die Wände integriert oder als gesondert aufgebrachte Schicht oder als Folie ausgeführt sein.

Je nach Stückzahl und Fertigungsverfahren können die Wände komplett mit leitfähigen Eigenschaften bei der Herstellung oder erst nachträglich versehen werden.

Außerdem können die elektromagnetischen Feldreflektoren nicht transparent oder transparent sein, wobei eine transparente Variante durch eine sehr dünne oder eine unterbrochene, gerasterte Schicht oder Folie ausgeführt sein kann.

Während nicht transparente elektromagnetische Feldreflektoren einfach durch eine Metallplatte oder -folie realisiert werden können, ist bei sowohl leitfähigen als auch transparenten elektromagnetischen Feldreflektoren ein Kompromiss zwischen Leitfähigkeit und Transparenz nötig.

Die konstruktive Ausgestaltung des Korridors der Lesestation führt also zu einem Synergieeffekt, in dem erstens durch Reflexionen dafür gesorgt wird, dass eine weitgehend gleichmäßige Feldstärke im Inneren des Korridors erzielt wird, zweitens durch die Länge des Korridors und das Abknicken der Wände eine Fahrtrichtungsänderung erzwungen wird, die zu einer verlängerten Verweildauer der RFID-Transponder im Korridor beiträgt und drittens durch das Drehen des Transportwagens die Ausrichtung der Antennen verändert wird, so dass vorher ungünstig zur Feldausbreitung ausgerichtete Antennen während des restlichen Aufenthalts im Korridor mit hoher Wahrscheinlichkeit eine günstigere Ausrichtung erhalten.

Bei einer bevorzugten Ausführung knicken die Seitenwände nach einem ersten Verlauf entlang des Korridors einmal unter einem Winkel von 90° ab und werden als zweiter Verlauf entlang des Korridors fortgesetzt.

Dieser Ausführung ist konstruktiv einfach realisierbar und auch an Räume mit üblicherweise senkrecht zueinanderstehenden Seitenwänden angepasst, dass sie wenig nicht nutzbaren Totraum schafft. Außerdem führt das Abknicken um 90° zu mehrfachen Reflexionen des von der Antenne des Lesegerätes abgestrahlten Lesefeldes. Ein weiterer Vorteil ist die bei dieser Richtungsänderung erzielte maximale Verweildauer durch die Notwendigkeit, den Transportwagen abzubremsen und anschließend in eine Querrichtung umzulenken und weiterzuschieben, ohne dass diese Richtungsänderung so übertrieben ist, dass Proteste der Nutzer zu erwarten sind. Noch ein Vorteil ist, dass der Nutzer nicht dazu gezwungen wird, anzuhalten oder den Transportwagen in eine Sackgasse oder geschlossene Lesestation, nur zum Erfassen der Transponder, schieben zu müssen. Die Inventarisierung erfolgt durch die erfindungsgemäße Konstruktion "en passant" und erhöht so die Akzeptanz der Lesestation.

Bei einer Weiterbildung knicken die Seitenwände zusätzlich ein weiteres Mal unter einem Winkel von 90° ab, der gegensinnig zur ersten Abknickung weist, derart, dass ein Dritter Verlauf entlang des Korridors parallel aber versetzt zum ersten Verlauf ausgerichtet ist.

Da der Nutzer bei dieser Weiterbildung gezwungen ist, zweimal kurz hintereinander den Transportwagen abzubremsen und in die zu vorherigen Fahrtrichtung weisende Querrichtung umzulenken, ergibt sich eine noch längere Verweildauer des Transportwagens mit den mit RFID-Transponder ausgestatteten Gegenständen im Korridor. Da die Zuverlässigkeit des richtigen Lesens der Daten aller RFID-Transponder abhängig von der Zeit ist, die zum Lesen und bei Kollision zur Kollisionsauflösung gleichzeitig sendender RFID-Transponder zur Verfügung steht, trägt diese Weiterbildung dazu bei, das Risiko nicht erkannter und ungelesener RFID-Transponder deutlich zu verringern oder auszuschließen.

Das wenigstens eine Lesegerät kann eine Richtantenne aufweisen, deren Hauptstrahlrichtung in das Innere des Korridors und unter einem von der Senkrechten abweichen Winkel auf eine Reflektorebene der elektromagnetischen Feldreflektoren ausgerichtet ist.

Dadurch wird das elektromagnetische Lesefeld gezielt auf das Innere des Korridors gerichtet und beschränkt. Durch die Ausrichtung der Hauptstrahlrichtung in einem von der Senkrechten abweichenden Winkel auf eine Reflektorebene wird eine mehrfache Reflexion an den Wänden und dabei gleichzeitg eine Ausbreitung des elektromagnetischen Feldes von der Antenne des Lesegerätes entlang des gesamten Inneren des Korridors erzielt. Außerdem wird auch eine hochfrequente Ausleuchtung des Bereichs des Korridors ermöglicht, der wegen der Abknickung nicht im direkten Sichtfeld der Antenne liegt.

Das wenigstens eine Lesegerät kann auch eine Patch-Antennenanordnung aufweisen, die gemeinsam mit den Feldreflektoren auf den Längswänden angeordnet ist oder in die Längswände integriert ist.

Eine Patch-Antennenanordnung besteht aus einer oder einer Mehrzahl planer Strahlerflächen, deren Kantenlänge auf ein ganzzahliges Vielfaches der Wellenlänge des elektromagnetischen Feldes bemessen ist. Wegen der planen Bauart ist sie besonders geeignet, in die Seitenwände integriert zu werden. Um eine Abstrahlung nach außerhalb des Korridors zu verhindern, kann die Abschirmung auf der Außenseite angeordnet werden und die Strahlerflächen der Patch-Antennenanordnung durch einen von der Wandstärke vorgegebenen Abstand auf der Innenseite. Die dazwischenliegende Wand muss aus einem elektrisch nichtleitenden Material bestehen. Die Abschirmung wirkt dann als Reflektor, so dass die Antennenanordnung unter Antennengewinn in das Innere des Korridors abstrahlen kann. Besteht die Patch-Antennenanordnung aus mehreren Strahlerflächen, so kann durch phasenverschobene Ansteuerung auch eine Abstrahlung unter einem von der Senkrechten zur Reflektorebene abweichenden Winkel erzielt werden Vorzugsweise sind ein oder mehrere weitere Lesegeräte im Verlauf des Korridors angeordnet und zueinander entlang der Längsachse des Korridors versetzt.

Da die Feldstärke des elektromagnetischen Feldes mit dem Abstand von der Antenne des Lesegerätes abnimmt und im Falle von Reflexionen an den Seitenwänden bei jeder Reflexion zusätzlich gedämpft wird und ohnehin auch der zurückgelegte Weg bis zum anderen Ende des Korridors größer als der direkte Weg ist, kann die Feldstärke eventuell für eine Energieversorgung der RFID-Transponder am anderen Ende des Korridors nicht ausreichend sein. Durch die Anordnung weiterer Lesegeräte im Verlauf des Korridors kann die bei einer einzigen Antenne abnehmende Lesefeldstärke ausgeglichen werden.

Bei einer Ausführungsform der Erfindung sind wenigstens die Seitenwände oder Teile der Seitenwände des Korridors transparent.

Da durch die transparenten Teile der Wände der umgebende Raum sichtbar bleibt, wird zu Klaustrophobie neigenden Personen das Passieren des Korridors erleichtert.

Bei einer weiteren Ausführung können die Seitenwände oder Teile der Seitenwände, die dem Eingang und Ausgang des Korridors gegenüberliegen, intransparent sein.

Diese Maßnahme verhindert, dass Nutzer die Existenz der Seitenwände an der Abknickung nicht rechtzeitig wahrnehmen und den Transportwagen nicht rechtzeitig abbremsen und mit den Seitenwänden kollidieren lassen.

Außerdem kann entlang der Seitenwände innen ein Handlauf oder eine Abstandsschiene angeordnet sein.

Diese Maßnahme sorgt dafür, dass eine drohende Kollision des Transportwagens mit den Seitenwänden rechtzeitig vor dem Zusammenprall verhindert wird. Dabei geht es nicht nur darum, Beschädigungen der Seitenwände zu vermeiden, sondern auch darum, die im Transportwagen befindlichen und den Seitenwänden benachbarten RFID-Transponder auf Abstand von der Reflektorebene zu halten, damit sie elektromagnetische Energie zur eigenen Versorgung und Aussendung der Daten aus dem elektromagnetischen Feld im Korridor aufnehmen können. Bei zu starker Annäherung an leitende Flächen wird das Feld nämlich so verzerrt, dass nicht mehr genügend Energie von den Antennen der RFID-Transponder aufgenommen werden kann.

Bei einer weiteren Ausführung sind am Eingang und Ausgang des Korridors Ausweisleser und Zutrittsampeln angeordnet und die Ausweisleser und Zutrittsampeln sind zusammen mit den Lesegeräten im oder am Korridor mit einem gemeinsamen Steuerrechner verbunden oder gekoppelt.

Diese Maßnahme dient der Zutrittskontrolle des Lagers durch die Nutzer und der Identifizierung der zugangsberechtigten Nutzer. Außerdem kann nach Betätigen des Ausweislesers ein zuvor im Stand-by-Modus mit verringerter Energieaufnahme befindliches Lesegerät für den Korridor in den Betriebsmodus geschaltet werden. Auch eine Begegnung von Transportwagen, die gleichzeitig von entgegengesetzten Seiten in den Korridor hineinfahren, wird dadurch vermieden.

Auf der dem Lager zugewandten Seite und vom Korridor örtlich abgesetzt kann zusätzlich ein mit einem Ausweisleser kombiniertes Lesegerät angeordnet sein, das ebenfalls Bestandteil der Lesestation ist. Dieses Lesegerät dient zur Zuordnung entnommener Gegenstände zu Nutzern und ist gemeinsam mit dem weiteren Ausweisleser ebenfalls mit dem gemeinsamen Steuerrechner verbunden oder gekoppelt.

Durch das mit dem Ausweisleser kombinierte Lesegerät werden die von einem Nutzer aus dem Lager entnommenen Gegenstände diesem Nutzer zugeordnet. Da durch die Kombination das Lesen des Ausweises des Nutzers und das Lesen der RFID-Transponder der für den Nutzer bestimmten Gegenstände zeitgleich oder in kurzen Zeitabständen erfolgt, ist eine eindeutige Zuordnung dieser Gegenstände zu Nutzern möglich. Die Ausweisleser an Eingang und Ausgang des Korridors in Verbindung mit den Lesegeräten im Inneren des Korridors könnten die Aufgabe auch erfüllen, die Zuordnung der Gegenstände zu Nutzern vorzunehmen. Hier besteht aber der Nachteil, dass bei gleichzeitig mehreren Nutzern zu viel Wartezeit vergeht, bis einer den Korridor verlassen hat und der nächste an der Reihe ist, sich auszuweisen und den Korridor zu passieren.

Außerdem kann durch das mit dem Ausweisleser kombinierte Lesegerät bei der Entnahme von Gegenständen aus dem Lager leichter unterschieden werden, ob sie zu Zwecke der Benutzung entnommen werden oder zum Zwecke der Verlegung an einen anderen Ort. Während das dem Korridor zugeordnete Lesegerät das Passieren einer Vielzahl von RFID-Transponder im dreistelligen Bereich zulässt, kann das mit dem Ausweisleser kombinierte Lesegerät die Einhaltung der Entnahme nur einer begrenzten Anzahl von Gegenständen einstelligen Bereich überwachen und Entnahmen über die begrenzte Anzahl hinaus blockieren.

Nachfolgend wird die Erfindung anhand eines Ausführungsbeispiels erläutert, das in der Zeichnung dargestellt ist. Darin zeigen:
- Fig. 1: einen schematischen Grundriss einer Zugangs- und Lesestation im Zugang zu einem Lager mit einem einmalig unter einem rechten Winkel abknickenden Korridor,
- Fig. 2: einen vergrößerten, mehr detaillierten Grundriss des Korridors nach Fig. 1,
- Fig. 3: einen Grundriss eines Korridors der Zugangs- und Lesestation, der zweimal gegensinnig in einem rechten Winkel abknickt und
- Fig. 4: eine Vorderansicht auf einen Eingang der Zugangs- und Lesestation.

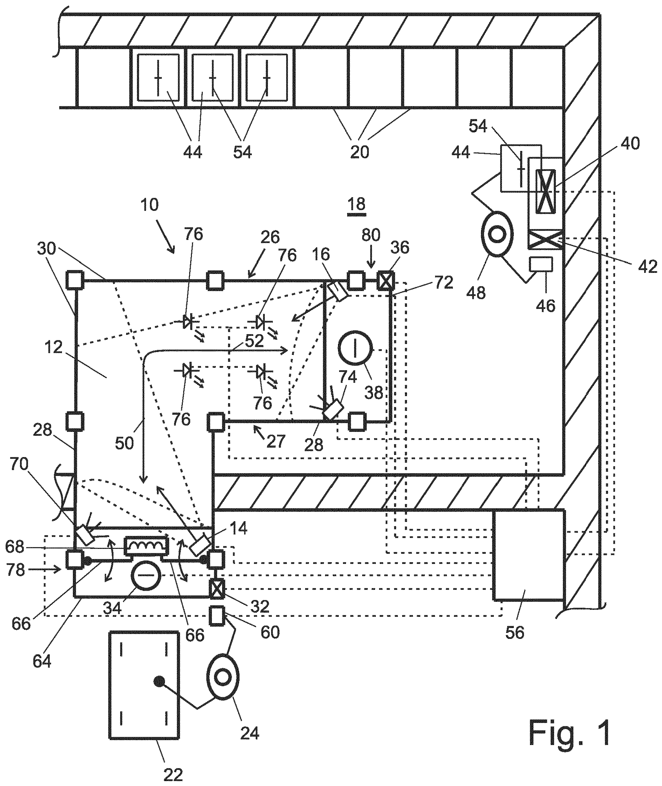

Die in Fig. 1 als schematischer Grundriss dargestellte Zugangs- und Lesestation 10 umfasst einen Korridor 12, der durch eine Bodenfläche und zwei Längswände 26, 27 begrenzt ist. In diesem Grundriss nicht darstellbar ist eine optionale Deckenfläche, die den Korridor 12 oben begrenzt. Der Korridor 12 besitzt einen Eingang 78 und einen Ausgang 80 zu einem Lager 18 für Gegenstände 44, die mit RFID-Transpondern 54 ausgestattet sind. Am Eingang 78 befindet sich ein Türportal 64 mit einer Tür 66, die hier als zweiflügelige Pendeltür ausgebildet ist. Die Tür 66 kann in beiden Durchgangsrichtungen von einem Nutzer 24 oder einem Transportwagen 22 aufgestoßen werden, sofern sie sich in einem unverriegelten Zustand befindet. Danach kehrt die Tür 66 in einen Neutralzustand zurück, in dem sie durch eine elektromagnetische Sperrvorrichtung 68 verriegelt werden kann.

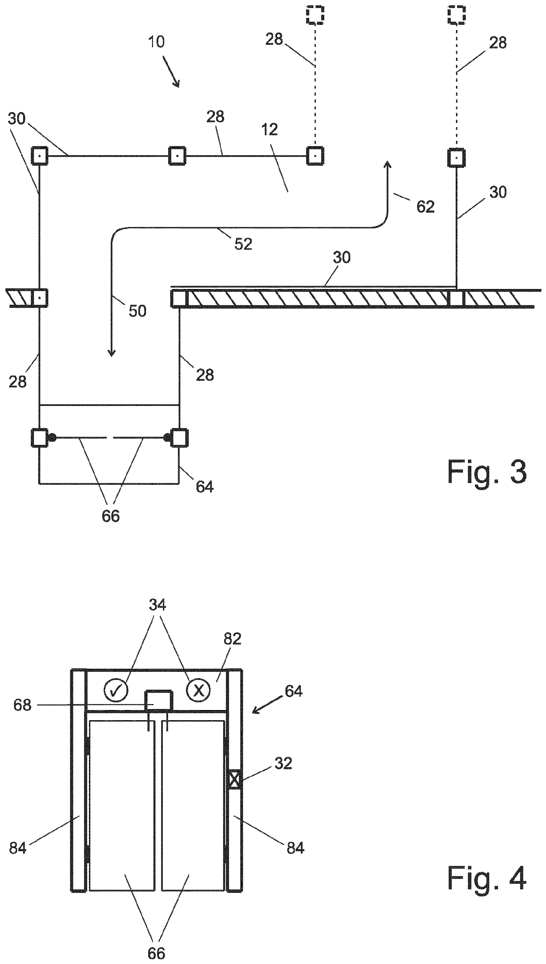

Das Türportal 64 ist in Fig. 4 in Vorderansicht dargestellt und besteht aus einer oberen Brücke 82, die zwei seitliche Stützen 84 verbindet. In den Stützen 84 befinden sich Scharniere für die Tür 66. In der Brücke 82 sind neben der elektromagnetischen Sperrvorrichtung 68 zahlreiche weitere elektronische Komponenten angeordnet, wie noch nachfolgend erläutert wird.

Die im Lager 18 befindlichen Gegenstände 44 können Textilien sein, die vom Personal eines Krankenhauses nur für eine begrenzte Zeit getragen werden und anschließend gereinigt und im gereinigten Zustand wieder in das Lager zurückgebracht werden. Ein mit dem jeweiligen Textil verbundener RFID-Transponder 54 kann jeweils Eigenschaften der Textilien, wie Art, Konfektionsgröße, Anzahl der Reinigungsvorgänge speichern. Diese Angabe erleichtern eine gezielte Sortierung und Ordnung bei der Lagerung in Regalen, Fächern 20 oder Schränken, eine Verfolgung bei der Logistik und ermöglichen die Anzahl der Waschvorgänge bis zum Erreichen der maximalen Nutzungsdauer zu überwachen.

Während zur Bestückung des Lagers 18 die Gegenstände 44 in einer Vielzahl auf einem Transportwagen 22 ins Lager 18 gefahren werden, erfolgt die Entnahme in der Regel nur in Form von einigen Gegenständen 44, die einem Nutzer 48 zugeordnet werden. Es ist allerdings auch möglich, dass im Zuge einer Verlegung der Gegenstände 44 an einen anderen Ort auch eine Vielzahl von Gegenständen 44 auf einem Transportwagen 22 wieder aus dem Lager 18 herausgefahren werden.

Der Korridor 12 weist vom Eingang beginnend einem ersten geradlinigen Verlauf 50 auf, knickt etwa in der Mitte der Gesamtstrecke des Korridors 12 um 90° ab und führt in einem zweiten geradlinigen Verlauf 52 zum Ausgang. Am Eingang und Ausgang des Korridors 12 ist jeweils ein Lesegerät 14, 16 zum Lesen von RFID-Transpondern 54 angeordnet und die Lesegeräte 14, 16 sind mit einem Steuerrechner 56 verbunden. Die Antennen der Lesegeräte 14, 16 weisen in das Innere des Korridors 12 und die Hauptstrahlrichtung der Antennen ist jeweils unter einem Winkel von 45° auf die gegenüberliegende Seitenwand des Korridors 12 gerichtet. Die Seitenwände 26, 27 des Korridors 12 weisen elektromagnetische Feldreflektoren auf, die sich entlang der Achse des Korridors 12 vom Eingang zum Ausgang erstrecken. Auf diese Weise wird eine ausgewogene Verteilung des elektromagnetischen Lesefeldes im Inneren des Korridors 12 erreicht. Diese Feldreflektoren sind hier elektrisch leitfähige Folien, die einerseits das Innere des Korridors 12 nach außen abschirmen und andererseits elektromagnetische Wellen und -Felder bei ihrer Ausbreitung im Inneren des Korridors 12 reflektieren. Damit wird sichergestellt, dass im Korridor 12 keine größeren Bereiche mit so geringer Feldstärke existieren, dass RFID-Transponder 54 in diesem Bereich nicht die nötige Energie zu ihrem eigenen Betrieb erhalten daher nicht ihre Daten zum Lesegerät 14, 16 übertragen können.

Die Seitenwände 26, 27 sind bis auf Teile, der dem Eingang und Ausgang gegenüberliegt, mit transparenten Reflektorfolien 28 ausgestattet. Die dem Eingang und Ausgang der gegenüberliegenden Teile der Seitenwände 26, 27 sind hingegen mit nicht transparenten Reflektorfolien 30 ausgestattet.

Am Eingang 78 und Ausgang 80 des Korridors 12 sind jeweils ein Ausweisleser 32, 36, eine Zutrittsampel 34, 38 und ein Näherungssensor 70,74 angeordnet, die ebenfalls mit dem Steuerrechner 56 verbunden sind. Außerdem befindet sich auf der dem Lager 18 zugewandten Seite und abgesetzt vom Korridor 12 zusätzlich ein mit einem Ausweisleser 42 kombiniertes Lesegerät 40 für RFID-Transponder 54, das ebenfalls mit dem Steuerrechner 56 verbunden ist. In einer nicht dargestellten Decke des Korridors 12 befinden sich Leuchten 76, die ebenfalls mit dem Steuerrechner 56 verbunden und durch ihn gesteuert sind.

Zur Bestückung des Lagers 18 mit auf einem Transportwagen befindlichen Gegenständen 44 mit RFID-Transpondern 54 meldet sich ein Nutzer 24, in diesem Fall ein Lagerist, mit einem Ausweis 60 am Ausweisleser 32 an. Voraussetzung für eine Freigabe ist ein gültiger Ausweis 60 und ein freier Korridor 12. Sobald die Zutrittsampel 34 den Eingang freigibt und die Tür 66 entriegelt ist, schiebt der Lagerist den Transportwagen 22 in den Korridor 12. Dabei stößt er die Tür 66 mit dem Transportwagen 22 auf. Die Tür 66 kehrt anschließend in ihre Neutralstellung zurück und wird erneut verriegelt. Durch den Näherungssensor 70 wird der Zutritt in den Korridor erkannt und die Leuchten 76 eingeschaltet. Das Ausschalten der Leuchten kann zeitgesteuert oder durch Passieren des Näherungssensor 74 am Ausgang 80 des Korridors 12 erfolgen. Durch eine spezielle Kennung des Ausweises oder durch eine zusätzliche Eingabe am Ausweisleser 32 wird dem Steuerrechner 56 übermittelt, dass eine Bestückung des Lagers erfolgt. Dazu wird zusätzlich das Lesegerät 14 und/oder 16 eingeschaltet. Bei anderen Nutzern 24, die ausschließlich Gegenstände 44 aus dem Lager 18 entnehmen wollen, bleiben die Lesegeräte 14 und 16 hingegen ausgeschaltet, wenn der Nutzer 24 den Korridor 12 vom Eingang 78 in Richtung des Ausgangs 80 passiert.

Durch das in dem Korridor 12 herrschende Lesefeld werden die RFID-Transponder 54 der Gegenstände 44 veranlasst, ihre Daten zu senden. Bei einem beispielhaften Lesevorgang mit RFID-Transpondern und Lesegeräten im UHF-Bereich dauert das Lesen eines Transponders etwa zwischen 3 und 5 ms. Mit einem Transportwagen werden etwa sechshundert Gegenstände mit RFID-Transpondern gleichzeitig transportiert. Die theoretische Erfassungszeit wäre dann 3 Sekunden für alle RFID-Transponder. Durch Kollisionen, d. h. gleichzeitiges Senden mehrerer Transponder, kann aber ein mehrfacher Übertragungsversuch nötig sein, bis die Daten erfolgreich übertragen sind. Die reale Erfassungszeit ist somit länger.

Um die Erfassung aller RFID-Transponder 54 sicherzustellen, ist daher eine ausreichende Verweildauer des Transportwagens 22 im Korridor 12 nötig. Dies wird durch eine Schikane in Form der abknickenden Verläufe des Korridors 12 erreicht. Der Nutzer 24 kann also den Transportwagen 22 nicht einfach mit hoher Geschwindigkeit durch den Korridor 12 fahren, sondern muss ihn bei Erreichen der Abknickung abbremsen oder anhalten. Dann muss er die Fahrtrichtung ändern, in dem er bei einem nicht quer verfahrbaren Transportwagen 22 diesen um 90° dreht und anschließend weiterfährt und den Korridor 12 wieder verlässt. Aber auch bei einem quer verfahrbaren Transportwagen 22 müsste der Nutzer 24 seine Bewegungsrichtung um 90° ändern. In jedem Fall benötigt die Änderung der Fahrtrichtung Zeit, was im Interesse einer zuverlässigen Erfassung aller RFID-Transponder 54 ist.

Bei Abschluss der Einlagerung der Gegenstände 44 oder auch bei Verlassen des Korridors 12 hält der Nutzer 24 den Ausweis 60 an den anderen Ausweisleser 36, woraufhin der Korridor 12 für weitere Erfassungsvorgänge durch die Zutrittsampeln 34, 38 freigegeben wird.

Bei Verlegung von Gegenständen 44 mittels eines Transportwagens 22 vom Lager 18 zu einem anderen Ort erfolgen die vorgeschilderten Vorgänge in umgekehrter Richtung, wobei diesmal zuerst der auf der Lagerseite befindliche Ausweisleser 36 benutzt wird und die auf der Lagerseite befindliche Zutrittsampel 38 den Zutritt zu Korridor 12 freigibt. Beim Eintritt in den Korridor 12 werden durch den Näherungssensor 74 die Leuchten 76 und das Lesegerät 14, 16 eingeschaltet. Beim Durchqueren des Korridors 12 wird die Aufenthaltsdauer genutzt, um sämtliche RFID-Transponder 54 der Gegenstände 44 zu lesen. Nachdem die Lesevorgänge erfolgreich abgeschlossen sind wird das Lesegerät 14, 16 abgeschaltet und die Tür 66 entriegelt, sodass sie durch den Transportwagen 22 oder den Lageristen aufgestoßen werden kann und nach Rückkehr in die Neutralstellung erneut verriegelt wird.

Werden die im Lager 18 gelagerten Gegenstände 44 aus Fächern 20 zur Benutzung entnommen, erfolgt die Erfassung nicht durch die Lesegeräte im Korridor, sondern durch ein gesondertes im Lager 18 befindliches Lesegerät 40, das mit einem Ausweisleser 42 kombiniert ist. Der Nutzer 48 begibt sich mit den aus den Fächern 20 entnommenen Gegenständen 44 zum Lesegerät 40 und weist sich mit einem Ausweis 46 aus, der vom Ausweisleser 42 gelesen werden. Anschließend werden die entnommenen Gegenstände 44 durch das Lesegerät 40 registriert und mittels des Steuerrechners 56 dem jeweiligen Nutzer 48 persönlich zugeordnet. Dabei kann die Anzahl der gleichzeitig entnommenen Gegenstände begrenzt sein und Alarm ausgelöst werden, wenn der Nutzer 48 versucht, weitere Gegenstände auf sich zu registrieren. Anschließend kann er das Lager 18 durch den Korridor 12 verlassen, ohne dass dort eine erneute Registrierung der RFID-Transponder an den entnommenen Gegenständen vorgenommen wird.

Durch die Lesegeräte 14 und/oder 16 ist es ferner möglich zu überwachen, ob Gegenstände mit Transponder dem Lager entnommen werden, die nicht am Lesegerät 40 einem Nutzer 48 zugeordnet wurden. Diese unregistrierte Entnahme kann durch die Ampeln 34, 38, 86 angezeigt werden. Trägt der Nutzer 48 Gegenstände 44 mit Transponder 54 die vorher auf ihn registriert wurden, kann die Zugangs- und Lesestation 10 erkennen, wer unregistriert Gegenstände 44 entnimmt. In diesem Fall wird die Tür 66 nicht entriegelt und der Nutzer 48 wird veranlasst, die nicht registrierten Gegenstände 44 entweder zu registrieren oder ins Lager 18 zurückzubringen. Zur Signalisierung können auch die Leuchten 76 im Korridor ihre Farbe ändern, zum Beispiel von weiß auf rot.

Steht Nutzern nur ein begrenztes Kontingent an Gegenständen 44 zu und haben Nutzer bereits dieses Kontingent ausgenutzt ohne verbrauchte, verschmutzte oder beschädigte Gegenstände in einer Rückgabestation zurückzugeben, so wird Ihnen beim Versuch, durch den Eingang 78 zu gelangen, der Zutritt verweigert. Dies geschieht durch Signalisierung über die Zutrittsampeln 34 und Verriegelung der Tür 66.

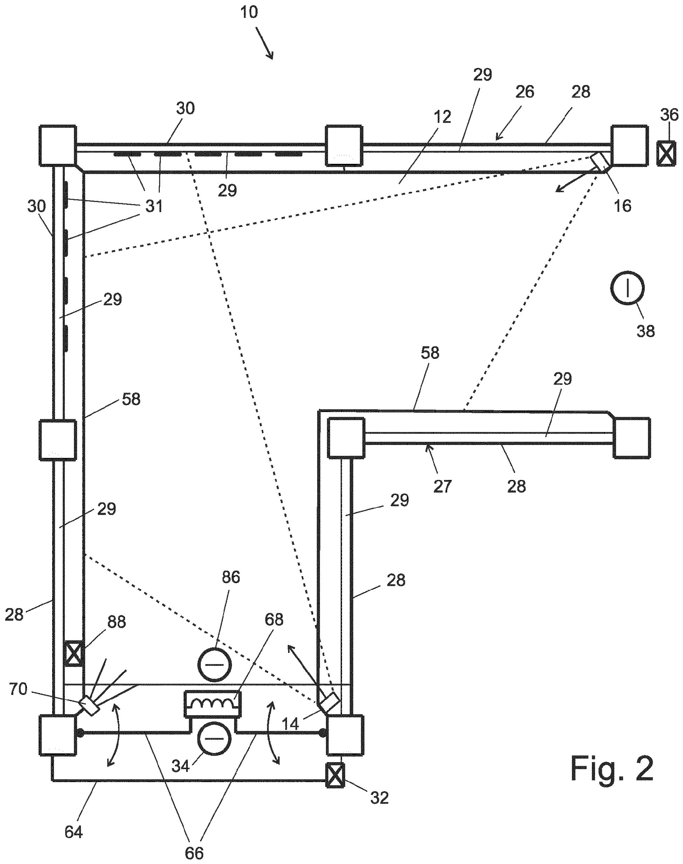

Fig. 2 zeigt einen vergrößerten, mehr detaillierten Grundriss des Korridors nach Fig. 1. Daraus ist ersichtlich, dass die Seitenwände aus Scheiben 29 bestehen, die außen mit transparenten Reflektorfolien 28 und nicht transparenten Reflektorfolien 30 versehen sind. Außerdem sind noch alternative Antennen für Lesegeräte dargestellt, zwei Patchantennenanordnungen mit Patches 31 auf den Innenseiten der Scheiben. Die nicht transparenten Reflektorfolien 30 sind hier gleichzeitig die Reflektoren der durch die Patches 31 gebildeten Strahlerelemente. An den Seitenwänden 26, 27 des Korridors 12 sind außerdem Handläufe 58 angeordnet, die einen Abstand von den Seitenwänden aufweisen. Außerdem ist kein zweites Portal vorhanden. Dafür umfasst das Türportal 64 zusätzlich eine Zutrittsampeln 78 und einen Ausweisleser 88 im Inneren des Korridors.

Fig. 3 zeigt einen Grundriss eines Korridors 12 der Zugangs- und Lesestation, der zweimal gegensinnig in einem rechten Winkel abgeknickt ist. Da der Korridor 12 gegenüber der Ausführung nach Fig. 1 länger und einmal mehr abgeknickt ist, wird eine weitere Erhöhung der Verweildauer eines Transportwagens mit Gegenständen, die RFID-Transponder tragen, im Korridor erreicht. Statt eines Eingangs oder Ausgangs rechts oben in der Seitenwand kann auch noch ein weiteres Korridorsegment angeschlossen sein, wie die gestrichelte Darstellung andeutet. Es ist neben den aus Fig.1 und Fig. 2 entnehmbaren Verläufen 50, 52 des Korridors 12 noch ein dritter Verlauf 62 dargestellt.

Hinsichtlich der weiteren Ausstattung entspricht der Korridor nach Fig. 2 dem Korridor nach Fig. 1, weshalb auf diese Figur die gleichen Bezugszeichenbezeichnungen zutreffen. Wegen der größeren Länge kann es allerdings erforderlich sein, noch ein oder zwei weitere Lesegeräte im Inneren anzuordnen.

Fig. 4 zeigt schließlich die Vorderansicht auf einen Eingang 78 der Zugangs- und Lesestation 10. Am Eingang 78 befindet sich das Türportal 64 aus einer oberen Brücke 82 und zwei seitlichen Stützen 84 sowie einer Tür 66, die zwei pendelnde Flügel umfasst. Die Brücke 82 verbindet einerseits die seitlichen Stützen 84 und beherbergt außerdem zahlreiche elektrische und elektronische Komponenten. Dazu gehören eine elektromagnetische Sperre 68 zur Verriegelung und Freigabe der Tür 66, Zutrittsampeln 34, auf die in der Zeichnung abgewandten und zum Korridor gerichteten Seite ein Lesegerät, einen Näherungssensor und optional eine weitere Zutrittsampel. Ferner kann sich in der Brücke 82 auch der Steuerrechner befinden. In den Stützen 84 ist außerdem ein Ausweisleser 32 angeordnet. Ein weiterer Ausweisleser kann auch auf der zum Korridor 12 gerichteten Seite angeordnet sein.

**Bezugszeichenliste**

| | | | |
|---|---|---|---|
| 10 | Zugangs- und Lesestation | 46 | Ausweis |
| 12 | Korridor | 48 | Nutzer |
| 14 | Lesegerät | 50 | erster Verlauf |
| 16 | Lesegerät | 52 | zweiter Verlauf |
| 18 | Lager | 54 | RFID-Transponder |
| 20 | Fächer | 56 | Steuerrechner |
| 22 | Transportwagen | 58 | Handlauf |
| 24 | Nutzer | 60 | Ausweis |
| 26 | Seitenwand | 62 | dritter Verlauf |
| 27 | Seitenwand | 64 | Türportal |
| 28 | transparente Reflektorfolie | 66 | Tür |
| 29 | Scheibe | 68 | elektromagn. Sperrvorrichtung |
| 30 | nicht transparente Reflektorfolie | 70 | Näherungssensor |
| 31 | Patch | 72 | zweites Portal |
| 32 | Ausweisleser | 74 | Näherungssensor |
| 34 | Zutrittsampel | 76 | Leuchten |
| 36 | Ausweisleser | 78 | Eingang |
| 38 | Zutrittsampel | 80 | Ausgang |
| 40 | Lesegerät | 82 | Brücke |
| 42 | Ausweisleser | 84 | Stützen |
| 44 | Gegenstand | 86 | Zutrittsampel |
| | | 88 | Ausweisleser |

## Patentansprüche

1. Zugangs- und Lesestation, bestehend aus einem durch eine Bodenfläche, wenigstens zwei Seitenlängswände (26, 27) und optional eine Deckenfläche begrenzten, wenigstens einmal im Verlauf abknickenden Korridor (12) mit einem Eingang (78) und einem in ein Lager (18) mündenden Ausgang (80), wobei im oder am Korridor (12) wenigstens ein Lesegerät (14, 16) für RFID Transponder (54) angeordnet ist, das im Inneren des Korridors (12) ein elektromagnetisches Lesefeld erzeugt, ferner bestehend aus einem Türportal (64) mit einer verschließbaren Tür (66) zum kontrollierten Sperren oder Freigeben des Durchgangs durch den Korridor (12) und Ausweislesern (32, 36, 42) zum Erfassen von Nutzern und Berechtigungen zum Passieren der Tür (66), **dadurch gekennzeichnet, dass** das Türportal (64) mit der verschließbaren Tür (66) die einzige Durchgangssperre des Korridors (12) ist und am Eingang (78) oder innerhalb des Korridors (12) angeordnet ist, während der Ausgang (80) des Korridors offen ist, dass am Ausgang (80) des Korridors (12) ein zweites Portal (72), jedoch ohne Tür angeordnet ist und in oder an einer Brücke des zweiten Portals (72) eine in das Innere des Korridors (12) gerichtete Leseantenne eines RFID Lesegeräts (14, 16) angeordnet ist sowie Zutrittsampeln (38) angeordnet sind, die auf die vom Korridor (12) abgewandte Seite des Ausgangs (80) gerichtet sind, und Näherungssensoren (74) angeordnet sind, die auf die dem Korridor (12) zugewandte Seite des Ausgangs (80) gerichtet sind und mittels denen das RFID Lesegerät (14, 16) zum Erfassen entnommener Gegenstände (44) einschaltbar ist, die durch ein gesondertes Lesegerät im Lager bereits einem Nutzer zugeordnet wurden, und dass bei Verifizierung und Erkennung von Gegenständen, die nicht oder nicht richtig registriert wurden, die verschließbaren Türen im Türportal blockiert bleiben.

2. Zugangs- und Lesestation nach Anspruch 1, **dadurch gekennzeichnet, dass** die Tür (66) durch einen von einem Ausweisleser (32, 36, 88) gelesenen Nutzerausweis (60) servogesteuert öffne- und schließbar ist oder mechanisch durch einen Nutzer (48) oder einen Transportwagen (22) im freigegeben Modus aus ihrer Geschlossenstellung in die jeweiligen Durchgangsrichtung aufstoßbar ist und anschließend selbständig durch Federkraft in ihre Geschlossenstellung zurückkehrt.

3. Zugangs- und Lesestation nach Anspruch 1 oder 2, **dadurch gekennzeichnet, dass** in einer Brücke (82) des Türportals (64) ein Servoantrieb einer servogesteuerten Tür oder eine elektromechanische Sperrvorrichtung (68) einer mechanisch durch einen Nutzer (48) oder einen Transportwagen (22) aufstoßbaren Tür (66) angeordnet ist.

4. Zugangs- und Lesestation nach Anspruch 3, **dadurch gekennzeichnet, dass** in oder an derselben Brücke (82) des Türportals (64) wenigstens eine in das Innere des Korridors (12) gerichtete Leseantenne eines RFID Lesegeräts (14, 16) angeordnet ist.

5. Zugangs- und Lesestation nach Anspruch 3 oder 4, **dadurch gekennzeichnet, dass** in oder an derselben Brücke (82) des Türportals (64) Zutrittsampeln (34) angeordnet sind, die zumindest auf die vom Korridor (12) abgewandte Seite des Eingangs (78) gerichtet sind und Näherungssensoren (70 angeordnet sind, die auf die dem Korridor (12) zugewandte Seite des Eingangs (78) gerichtet sind und mittels denen und/oder durch die Ausweisleser (32) und/oder ein zusätzliches Eingabegerät das RFID Lesegerät (14, 16) zum Erfassen von zu bestückenden Gegenständen (44) einschaltbar ist.

6. Zugangs- und Lesestation nach einem der Ansprüche 1 bis 5, **dadurch gekennzeichnet, dass** die Sendeleistung des RFID-Lesegerät (14, 16) zwischen wenigstens zwei unterschiedlichen Leistungswerten wählbar ist, wobei zum Lesen der Transponder weniger Gegenstände, wie sie von normalen Nutzern bei Entnahme aus dem Lager mitgeführt werden, eine geringe Sendeleistung und beim Lesen der Transponder von Gegenständen auf einem Transportwagen, wie sie von Lageristen beim Bestücken oder Verlegen von Gegenständen vorkommen eine hohe Sendeleistung einschaltbar ist.

7. Zugangs- und Lesestation nach einem der Ansprüche 1 bis 6, **dadurch gekennzeichnet, dass** zusätzlich oder alternativ zum zweiten Portal (72) in oder an einer Brücke (82) des Türportals (64) Zutrittsampeln (86) angeordnet sind, die auf die dem Korridor (12) zugewandte Seite des Eingangs (78) gerichtet sind.

8. Zugangs- und Lesestation nach einem der Ansprüche 1 bis 7, **dadurch gekennzeichnet, dass** in oder an einer der seitlichen Stützen (84) des Türportals (64) Ausweisleser (32) angeordnet sind.

9. Zugangs- und Lesestation nach einem der Ansprüche 1 bis 8, **dadurch gekennzeichnet, dass** in oder an einer der seitlichen Stützen des zweiten Portals (72) Ausweisleser angeordnet sind.

10. Zugangs- und Lesestation nach einem der Ansprüche 1 bis 9, **dadurch gekennzeichnet, dass** in der Brücke (82) des Türportals (64) und/oder der Brücke des zweiten Portals (72) und/oder einer Decke des Korridors (12) Leuchten (76) angeordnet sind, die durch die Ausweisleser (32, 36, 88) oder beim Betreten des Korridors (12) durch die Näherungssensoren (70, 74) einschaltbar sind.

11. Zugangs- und Lesestation nach einem der Ansprüche 1 bis 10, **dadurch gekennzeichnet, dass** der Servoantrieb oder die elektromechanische Sperrvorrichtung (68) sowie die Leseantennen des RFID Lesegeräts (14, 16), die Ausweisleser (32, 36, 42, 88), die Zutrittsampeln (34, 38, 86), die Leuchten (76) und die Näherungssensoren (70, 74) mit einem gemeinsamen Steuerrechner (56) verbunden oder gekoppelt sind.

12. Zugangs- und Lesestation nach einem der Ansprüche 1 bis 11, **dadurch gekennzeichnet, dass** Seitenwände (26, 27) des Korridors (12) aus Wandelementen einheitlicher Höhe und Breite von 120cm x 120cm bestehen und dass das Türportal eine Tiefe von 30 cm aufweist.

## Claims

1. Access and reading station consisting of a corridor (12) which is bounded by a floor area, at least two longitudinal side walls (26, 27) and optionally a ceiling area, bends at least once in its course and has an entrance (78) and an exit (80) opening into a warehouse (18), wherein at least one reader (14, 16) for RFID transponders (54) is arranged in or on the corridor (12) and generates an electromagnetic reading field in the interior of the corridor (12), also consisting of a door portal (64) having a closable door (66) for the controlled blocking or enabling of passage through the corridor (12) and identity card readers (32, 36, 42) for detecting users and authorizations for passing through the door (66), **characterized in that** the door portal (64) having the closable door (66) is the only barrier of the corridor (12) and is arranged at the entrance (78) or inside the corridor (12), while the exit (80) of the corridor is open, **in that** a second portal (72), but without a door, is arranged at the exit (80) of the corridor (12) and a reading antenna of an RFID reader (14, 16), which reading antenna is directed into the interior of the corridor (12), is arranged in or on a bridge of the second portal (72), and access lights (38) which are directed to that side of the exit (80) which faces away from the corridor (12) are arranged, and proximity sensors (74) which are directed to that side of the exit (80) which faces the corridor (12) are arranged and can be used to switch on the RFID reader (14, 16) for detecting objects (44) which have been removed and have already been assigned to a user by a separate reader in the warehouse, and **in that** the closable doors in the door portal remain blocked upon verifying and identifying objects which have not been registered or have not been correctly registered.

2. Access and reading station according to Claim 1, **characterized in that** the door (66) can be opened and closed in a servo-controlled manner by means of a user identity card (60) read by an identity card reader (32, 36, 88) or can be mechanically pushed open from its closed position in the respective passage direction by a user (48) or a transport trolley (22) in the enabled mode and then independently returns to its closed position by spring force.

3. Access and reading station according to Claim 1 or 2, **characterized in that** a servo drive of a servo-controlled door or an electromechanical blocking apparatus (68) of a door (66) that can be mechanically pushed open by a user (48) or a transport trolley (22) is arranged in a bridge (82) of the door portal (64).

4. Access and reading station according to Claim 3, **characterized in that** at least one reading antenna of an RFID reader (14, 16), which reading antenna is directed into the interior of the corridor (12), is arranged in or on the same bridge (82) of the door portal (64).

5. Access and reading station according to Claim 3 or 4, **characterized in that** access lights (34) which are at least directed to that side of the entrance (78) which faces away from the corridor (12) are arranged in or on the same bridge (82) of the door portal (64), and proximity sensors (70, which are directed to that side of the entrance (78) which faces the corridor (12) and by means of which and/or by means of the identity card readers (32) and/or an additional input device the RFID reader (14, 16) for detecting objects (44) to be fitted can be switched on, are arranged.

6. Access and reading station according to one of Claims 1 to 5, **characterized in that** the transmission power of the RFID reader (14, 16) can be selected between at least two different power values, wherein a low transmission power can be switched on for the purpose of reading the transponders of a few objects which are carried by normal users during removal from the warehouse and a high transmission power can be switched on when reading the transponders of objects on a transport trolley, as are found by warehouse staff when fitting or transferring objects.

7. Access and reading station according to one of Claims 1 to 6, **characterized in that**, in addition or as an alternative to the second portal (72), access lights (86) which are directed to that side of the entrance (78) which faces the corridor (12) are arranged in or on a bridge (82) of the door portal (64).

8. Access and reading station according to one of Claims 1 to 7, **characterized in that** identity card readers (32) are arranged in or on one of the lateral supports (84) of the door portal (64).

9. Access and reading station according to one of Claims 1 to 8, **characterized in that** identity card readers are arranged in or on one of the lateral supports of the second portal (72).

10. Access and reading station according to one of Claims 1 to 9, **characterized in that** lights (76) which can be switched on by the identity card readers (32, 36, 88) or by the proximity sensors (70, 74) when the corridor (12) is entered are arranged in the bridge (82) of the door portal (64) and/or the bridge of the second portal (72) and/or a ceiling of the corridor (12).

11. Access and reading station according to one of Claims 1 to 10, **characterized in that** the servo drive or the electromechanical blocking apparatus (68) as well as the reading antennas of the RFID reader (14, 16), the identity card readers (32, 36, 42, 88), the access lights (34, 38, 86), the lights (76) and the proximity sensors (70, 74) are connected or coupled to a common control computer (56) .

12. Access and reading station according to one of Claims 1 to 11, **characterized in that** side walls (26, 27) of the corridor (12) consist of wall elements of a uniform height and width of 120 cm x 120 cm, and **in that** the door portal has a depth of 30 cm.

## Revendications

1. Station d'accès et de lecture, composée d'un couloir (12) ayant au moins un tournant sur son tracé, délimité par une surface de plancher, par au moins deux parois longitudinales latérales (26, 27) et en option par une surface de plafond, comprenant une entrée (78) et une sortie (80) débouchant sur un entrepôt (18), dans lequel, dans ou sur le couloir (12) est disposé au moins un appareil de lecture (14, 16) pour des transpondeurs RFID (54) qui génère un champ de lecture électromagnétique à l'intérieur du couloir (12), composée en outre d'un portique à porte (64) comprenant une porte verrouillable (66) servant au blocage ou à la libération contrôlé(e) du passage par le couloir (12) et de lecteurs de carte d'identité (32, 36, 42) servant à détecter des utilisateurs et des autorisations de passage de la porte (66),
**caractérisée en ce que** le portique à porte (64) comprenant la porte verrouillable (66) est la seule barrière de passage du couloir (12) et est disposé à l'entrée (78) ou à l'intérieur du couloir (12), tandis que la sortie (80) du couloir est ouverte, **en ce qu'**un deuxième portique (72), mais sans porte, est disposé à la sortie (80) du couloir (12), et dans ou sur un pont du deuxième portique (72), une antenne de lecture, orientée vers l'intérieur du couloir (12), d'un appareil de lecture RFID (14, 16) est disposée, et des feux d'accès (38) sont disposés qui sont orientés vers le côté de la sortie (80) détourné du couloir (12), et des capteurs de proximité (74) sont disposés qui sont orientés vers le côté de la sortie (80) tourné vers le couloir (12) et qui permettent d'activer l'appareil de lecture RFID (14, 16) pour détecter des objets prélevés (44) qui ont déjà été associés à un utilisateur par un appareil de lecture particulier à l'entrepôt, et **en ce qu'**en cas de vérification et d'identification d'objets qui n'ont pas été enregistrés ou n'ont pas été enregistrés correctement, les portes verrouillables dans le portique à porte restent bloquées.

2. Station d'accès et de lecture selon la revendication 1, **caractérisée en ce que** la porte (66) peut être ouverte et fermée de manière servocommandée par une carte d'identification d'utilisateur (60) lue par un lecteur de carte d'identification (32, 36, 88) ou peut être ouverte en étant poussée mécaniquement par un utilisateur (48) ou un chariot de transport (22) dans le mode libéré de sa position fermée dans la direction de passage respective et revient ensuite de façon autonome à sa position fermée par force de ressort.

3. Station d'accès et de lecture selon la revendication 1 ou 2, **caractérisée en ce qu'**un servomoteur d'une porte servocommandée ou un dispositif de blocage électromagnétique (68) d'une porte (66) pouvant être ouverte en étant poussée mécaniquement par un utilisateur (48) ou un chariot de transport (22) est disposé dans un pont (82) du portique à porte (64).

4. Station d'accès et de lecture selon la revendication 3, **caractérisée en ce qu'**au moins une antenne de lecture d'un appareil de lecture RFID (14, 16), orientée vers l'intérieur du couloir (12), est disposée dans ou sur le même pont (82) du portique à porte (64).

5. Station d'accès et de lecture selon la revendication 3 ou 4, **caractérisée en ce que** dans ou sur le même pont (82) du portique à porte (64), des feux d'accès (34) sont disposés qui sont orientés au moins vers le côté de l'entrée (78) détourné du couloir (12), et des capteurs de proximité (70 sont disposés, qui sont orientés vers le côté de l'entrée (78) tourné vers le couloir (12) et au moyen desquels et/ou par les lecteurs de carte d'identification (32) et/ou par un appareil de saisie supplémentaire le lecteur RFID (14, 16) servant à détecter des objets à équiper (44) peut être activé.

6. Station d'accès et de lecture selon l'une quelconque des revendications précédentes 1 à 5, **caractérisée en ce que** la puissance d'émission de l'appareil de lecture RFID (14, 16) peut être sélectionnée entre au moins deux valeurs de puissance différentes, dans laquelle, pour lire les transpondeurs d'un petit nombre d'objets, tels qu'ils sont transportés par des utilisateurs ordinaires lors d'un prélèvement sur l'entrepôt, une faible puissance d'émission peut être activée, et pour lire les transpondeurs d'objets sur un chariot de transport, tels qu'on les trouve lorsque les magasiniers équipent ou déplacent des objets, une haute puissance d'émission peut être activée.

7. Station d'accès et de lecture selon l'une quelconque des revendications 1 à 6, **caractérisée en ce qu'**en plus ou en variante du deuxième portique (72), dans ou sur un pont (82) du portique à porte (64), des feux d'accès (86) sont disposés qui sont orientés vers le côté de l'entrée (78) tourné vers le couloir (12).

8. Station d'accès et de lecture selon l'une quelconque des revendications 1 à 7, **caractérisée en ce que** des lecteurs de carte d'identification (32) sont disposés dans ou sur l'un des montants latéraux (84) du portique à porte (64).

9. Station d'accès et de lecture selon l'une quelconque des revendications 1 à 8, **caractérisée en ce que** des lecteurs de carte d'identification sont disposés dans ou sur l'un des montants latéraux du deuxième portique (72).

10. Station d'accès et de lecture selon l'une quelconque des revendications 1 à 9, **caractérisée en ce que** dans le pont (82) du portique à porte (64) et/ou dans le pont du deuxième portique (72) et/ou dans un plafond du couloir (12), des lampes (76) sont disposées qui peuvent être allumées par les lecteurs de carte d'identification (32, 36, 88) ou par les capteurs de proximité (70, 74) en cas d'entrée dans le couloir (12) .

11. Station d'accès et de lecture selon l'une quelconque des revendications 1 à 10, **caractérisée en ce que** le servomoteur ou le dispositif de blocage électromagnétique (68) ainsi que les antennes de lecture de l'appareil de lecture RFID (14, 16), les lecteurs de carte d'identification (32, 36, 42, 88), les feux d'accès (34, 38, 86), les lampes (76) et les capteurs de proximité (70, 74) sont reliés ou couplés à un ordinateur de commande commun (56).

12. Station d'accès et de lecture selon l'une quelconque des revendications 1 à 11, **caractérisée en ce que** des parois latérales (26, 27) du couloir (12) sont composées d'éléments de paroi d'une hauteur et d'une largeur uniformes de 120 cm x 120 cm, et **en ce que** le portique à porte présente une profondeur de 30 cm.
